# EUROPÄISCHE PATENTSCHRIFT

(11) **EP 2 525 074 B1**
(45) Veröffentlichungstag und Bekanntmachung des Hinweises auf die Patenterteilung: **09.11.2016**
(21) Anmeldenummer: 12164547.7
(22) Anmeldetag: 18.04.2012
(51) Int. Cl.: F02M 31/13, F02M 35/112, F02M 35/10, F02N 19/00

(54) **Brennkraftmaschine mit Heizvorrichtung zur Ansauglufterwärmung und Verfahren zum Betreiben einer derartigen Brennkraftmaschine**
Combustion engine with heating device for heating intake air and method for operating such a combustion engine
Moteur à combustion interne doté d'un dispositif de chauffage de l'air d'aspiration et procédé de fonctionnement d'un tel moteur à combustion interne

(30) Priorität: 16.05.2011 EP 11166157
(43) Veröffentlichungstag der Anmeldung: 21.11.2012
(73) Patentinhaber: Ford Global Technologies, LLC, Dearborn, MI 48126 (US)
(72) Erfinder: Hemink, Wilbert, 6374 EH Landgraaf (NL); Kuske, Andreas, 6243 CM Geulle (NL); Roettger, Daniel, 4731 Eynatten (BE); Vigild, Christian Winge, 52457 Aldenhoven (DE)
(74) Vertreter: Illing, Rolf

(56) Entgegenhaltungen:
- EP-A2- 2 628 928
- DE-A1- 10 332 936
- FR-A1- 2 876 419
- JP-A- 61 055 356
- US-A1- 2006 150 958

## Beschreibung

Die Erfindung betrifft eine Brennkraftmaschine mit mindestens einem Zylinderkopf und mindestens zwei Zylindern, bei der jeder Zylinder mindestens eine Einlaßöffnung zum Zuführen von Ladeluft in den Zylinder via Ansaugsystem aufweist, wobei
- zu jeder Einlaßöffnung eine Ansaugleitung führt,
- die Ansaugleitungen von mindestens zwei Zylindern unter Ausbildung eines Verteilerknotenpunktes zu einer Gesamtansaugleitung zusammenführen, und
- in der Gesamtansaugleitung eine Heizvorrichtung angeordnet ist.

Des Weiteren betrifft die Erfindung ein Verfahren zum Betreiben einer derartigen Brennkraftmaschine.

Im Rahmen der vorliegenden Erfindung umfaßt der Begriff Brennkraftmaschine insbesondere Ottomotoren, aber auch Dieselmotoren und Hybrid-Brennkraftmaschinen.

Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen der Ladeluft über die Einlaßöffnungen. Ist die Brennkraftmaschine mit einer Abgasrückführung ausgestattet, kann die Ladeluft neben der aus der Umgebung angesaugten Frischluft auch Abgas enthalten. Wird der Kraftstoff nicht direkt in die Zylinder eingespritzt, sondern beispielsweise stromaufwärts der Zylinder in das Ansaugsystem eingebracht, wird nicht nur die Ladeluft, sondern vielmehr auch der Kraftstoff den Zylindern via Einlaßöffnungen zugeführt.

Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten.

Die Ansaugleitungen, die zu den Einlaßöffnungen führen, sind nach dem Stand der Technik zumindest teilweise im Zylinderkopf integriert und werden in der Regel unter Ausbildung mindestens eines sogenannten Einlaßkrümmers zusammengeführt; häufig zu einer einzelnen Gesamtansaugleitung.

An das Ansaugsystem einer Brennkraftmaschine werden unterschiedliche Anforderungen gestellt. So wird unter anderem eine Anordnung und Ausbildung der Ansaugleitungen angestrebt, die zu einem möglichst geringen Druckverlust in der angesaugten Ladeluft führt, um eine gute Füllung der Zylinder zu gewährleisten.

Die Geometrie einer Ansaugleitung hat zudem Einfluß auf die Ladungsbewegung im Zylinder und damit auf die Gemischbildung, insbesondere bei direkteinspritzenden Brennkraftmaschinen. Häufig werden die Ansaugleitungen daher im Hinblick auf die Erzeugung eines sogenannten Tumbles oder einer Drallströmung ausgebildet, die die Gemischbildung beschleunigen und unterstützen, wobei ein Tumble ein Luftwirbel um eine gedachte Achse ist, die parallel zur Längsachse der Kurbelwelle verläuft, und als Drall ein Luftwirbel bezeichnet wird, dessen Achse parallel zur Kolben- bzw. Zylinderlängsachse verläuft.

Während des Ladungswechsels variiert der Druck entlang des Strömungsweges im Ansaugsystem. Derartige lokale Druckschwankungen breiten sich in gasförmigen Medien als Wellen aus. Um diese dynamischen Wellenvorgänge für die Optimierung des Ladungswechsels nutzbar zu machen, kann das Ansaugsystem in der Art ausgelegt werden, dass gegen Ende des Ansaugtaktes an den Einlaßöffnungen eine Überdruckwelle ankommt, die zu einer Verdichtung und damit zu einem gewissen Nachladeeffekt führt. Zielführend sind dabei in der Länge variable Ansaugleitungen.

In das Ansaugsystem bzw. die Gesamtansaugleitung kann eine Vielzahl von zusätzlichen Leitungen einmünden, beispielsweise die Bypaßleitung eines Ladeluftkühlers oder die Bypaßleitung eines Verdichters.

Darüber hinaus können Brennkraftmaschinen mit einer Heizvorrichtung ausgestattet werden, die im Ansaugsystem, d. h. Ansaugbereich, angeordnet ist und der Erwärmung der Ladeluft dient.

Das Erwärmen der Ladeluft kann unterschiedlichen Zielsetzungen dienen, beispielsweise der Verkürzung der Warmlaufphase nach einem Kaltstart, wie in der DE 198 54 077 A1 beschrieben.

Die deutsche Offenlegungsschrift DE 10 2006 030 464 A1nutzt das Anwärmen der Ansaugluft bei großvolumigen Dieselmotoren auch außerhalb der Start- und Warmlaufphase, um bei der Verwendung von Kraftstoff mit niedriger Cetanzahl im Leerlauf Zündaussetzer zu vermeiden. Darüber hinaus wird das Heizelement während der Regeneration des Partikelfilters zugeschaltet, ebenso wenn das Motordrehmoment und die Motordrehzahl einen vorgegebenen Mindestwert unterschreiten.

Eine für den Einsatz bei Brennkraftmaschinen geeignete Heizvorrichtung wird beispielsweise in der deutschen Offenlegungsschrift DE 102 14 166 A1und in der europäischen Patentschrift EP 0 793 399 B1 beschrieben.

Diese aus dem Stand der Technik bekannten Heizvorrichtungen umfassen bandförmige Heizelemente, die elektrisch beheizbar sind und einen in der Grundform rechteckigen Querschnitt aufweisen. Die bandförmigen Heizelemente werden in der Weise im Ansaugsystem angeordnet, dass ihr rechteckförmiger Querschnitt für die angesaugte Ladeluft einen möglichst kleinen Widerstand darstellt. Mit einer ersten schmalen Seite des Querschnitts sind die bandförmigen Heizelemente der angesaugten Ladeluftströmung zugewandt, wohingegen die langen Seiten des rechteckförmigen Querschnitts sich in Strömungsrichtung erstrecken, so dass die angesaugte Ladeluft tangential über die größeren Längsseiten strömt. Eine derartige Ausrichtung des Querschnitts ist strömungstechnisch günstig, aber auch im Hinblick auf den Wärmeübergang infolge Konvektion vorteilhaft.

Eine Brennkraftmaschine, bei der in der Gesamtansaugleitung mindestens eine Heizvorrichtung angeordnet ist, ist auch Gegenstand der vorliegenden Erfindung.

Durch den Einsatz einer Heizvorrichtung kann erreicht werden, dass die Ladeluft bei Eintritt in die Zylinder eine möglichst hohe Temperatur aufweist, wodurch sich insbesondere die Warmlaufphase nach einem Kaltstart der Brennkraftmaschine deutlich verkürzt. Vorteile bietet dies hinsichtlich der Schadstoffemissionen, insbesondere hinsichtlich der Emission an unverbrannten Kohlenwasserstoffen.

Zu berücksichtigen ist auch, dass eine zügige Aufheizung der Brennkraftmaschine mittels vorerwärmter Ladeluft zu einer schnelleren, vorliegend indirekten Erwärmung des Motoröls führt. Die damit einhergehende Abnahme der Viskosität bedingt eine Verringerung der Reibung bzw. Reibleistung, insbesondere in den mit Öl versorgten Lagern, ein Effekt, der sich vorteilhaft auf den Kraftstoffverbrauch und damit auf die Kohlendioxidemission der Brennkraftmaschine auswirkt.

Um zukünftige Grenzwerte für Schadstoffemissionen einzuhalten, sind aber neben der Aufheizung der Ladeluft sowie dem Vorsehen von Abgasnachbehandlungssystemen weitere Maßnahmen erforderlich, um die Schadstoffemissionen, insbesondere die Rohemissionen der Brennkraftmaschine zu senken. Von Interesse sind dabei insbesondere die Stickoxidemissionen, die bei den Dieselmotoren von hoher Relevanz sind.

Vor dem Hintergrund des oben Gesagten ist es eine Aufgabe der vorliegenden Erfindung, eine Brennkraftmaschine gemäß dem Oberbegriff des Anspruchs 1 bereitzustellen, die hinsichtlich ihres Emissionsverhaltens optimiert ist.

Eine weitere Teilaufgabe der vorliegenden Erfindung ist es, ein Verfahren zum Betreiben einer derartigen Brennkraftmaschine aufzuzeigen.

Gelöst wird die erste Teilaufgabe durch eine Brennkraftmaschine mit mindestens einem Zylinderkopf und mindestens zwei Zylindern, bei der jeder Zylinder mindestens eine Einlaßöffnung zum Zuführen von Ladeluft in den Zylinder via Ansaugsystem aufweist, wobei
- zu jeder Einlaßöffnung eine Ansaugleitung führt,
- die Ansaugleitungen von mindestens zwei Zylindern unter Ausbildung eines Verteilerknotenpunktes zu einer Gesamtansaugleitung zusammenführen, und
- in der Gesamtansaugleitung eine Heizvorrichtung angeordnet ist,
und die dadurch gekennzeichnet ist, dass
- mindestens eine externe Abgasrückführung vorgesehen ist, die mit einer Rückführleitung ausgestattet ist, welche in das Ansaugsystem mündet.

Erfindungsgemäß wird die Brennkraftmaschine mit einer externen Abgasrückführung ausgestattet. Da die Bildung von Stickoxiden nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung, d. h. die Rückführung von Verbrennungsgasen aus dem Abgasabführsystem in das Ansaugsystem zielführend, bei der mit zunehmender Abgasrückführrate die Stickoxidemissionen deutlich gesenkt werden können. Die Abgasrückführrate *x_{AGR}* bestimmt sich dabei zu *x_{AGR}* = *m_{AGR}* / *(m_{AGR}* + *m_{Frischluft}*), wobei *m_{AGR}* die Masse an zurückgeführtem Abgas und *m_{Frischluft}* die zugeführte, gegebenenfalls durch einen Verdichter geführte und komprimierte Frischluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, können hohe Abgasrückführraten erforderlich werden, die in der Größenordnung von *x_{AGR} ≈ 60% bis 70%* liegen können.

Die Ausstattung der erfindungsgemäßen Brennkraftmaschine mit einer Abgasrückführung löst die erste der Erfindung zugrunde liegende Aufgabe, nämlich eine Brennkraftmaschine gemäß dem Oberbegriff des Anspruchs 1 bereitzustellen, die hinsichtlich ihres Emissionsverhaltens optimiert ist.

Vorteilhaft können Ausführungsformen der Brennkraftmaschine sein, bei denen in der Rückführleitung eine Kühlvorrichtung vorgesehen ist, mit der die Temperatur im heißen Abgasstrom gesenkt wird, wodurch die Dichte der Abgase erhöht wird. Die Temperatur der Ladeluft, die sich bei der Mischung aus Frischluft und rückgeführtem Abgas einstellt, wird hierdurch zwar gesenkt. Vorteile ergeben sich aber bei der Realisierung hoher Abgasrückführraten. In der Regel wird eine Flüssigkeitskühlung verwendet. Gegebenenfalls ist es vorteilhaft, diese Kühlvorrichtung mit einer Bypaßleitung auszustatten.

Vorteilhaft können Ausführungsformen der Brennkraftmaschine sein, bei denen in der Rückführleitung ein Absperrelement zur Einstellung der Rückführrate vorgesehen ist.

Eine erfindungsgemäße Brennkraftmaschine kann auch zwei Zylinderköpfe aufweisen, beispielsweise, wenn mehrere Zylinder auf zwei Zylinderbänke verteilt angeordnet sind.

Erfindungsgemäß müssen nicht die Ansaugleitungen sämtlicher Zylinder eines Zylinderkopfes zu einer Gesamtansaugleitung zusammenführen, sondern nur die Ansaugleitungen von mindestens zwei Zylindern.

Vorteilhaft sind aber auch Ausführungsformen, bei denen die Ansaugleitungen sämtlicher Zylinder des mindestens einen Zylinderkopfes zu einer Gesamtansaugleitung zusammenführen.

Die Ansaugleitungen können auch unter Ausbildung von zwei Verteilerknotenpunkten zu zwei Gesamtansaugleitungen zusammenführen, wenn mehr als zwei Zylinder und/oder mehr als eine Einlaßöffnung je Zylinder vorgesehen sind. Gegebenenfalls sind dann zwei Heizvorrichtungen vorzusehen.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen die Rückführleitung stromaufwärts der Heizvorrichtung in das Ansaugsystem mündet.

Bevor die angesaugte Frischluft die Heizvorrichtung passiert, wird stromaufwärts der Heizvorrichtung Abgas eingeleitet, woraus eine gewisse Vorerwärmung der Ladeluft resultiert. Die Temperatur der Ladeluft, d. h. die Mischtemperatur des Frischluft-Abgas-Gemisches, erhöht sich infolge des heißen rückgeführten Abgases und zwar vor Eintritt in die Heizvorrichtung.

Wird das rückgeführte Abgas stromaufwärts der Heizvorrichtung eingeleitet, trägt die Heizvorrichtung zur Homogenisierung der Ladeluft bei.

Vorliegend wird nicht nur die angesaugte Frischluft, sondern auch das rückgeführte Abgas durch die Heizvorrichtung geführt, wobei sich Bestandteile des Abgases in bzw. an der Heizvorrichtung, beispielsweise an den Wandungen und den - gegebenenfalls bandförmigen - Heizelementen, ablagern können. Ein Umstand, der insbesondere dann von Relevanz ist, wenn das Abgas unbehandelt ist, d. h. keine Abgasnachbehandlung durchlaufen hat, bzw. die Heizvorrichtung deaktiviert ist. Die bei aktivierter Heizvorrichtung erhitzten Heizelemente wirken einer Verschmutzung durch Abgasbestandteile entgegen.

Die Ablagerungen können auch die Geometrie der Heizvorrichtung verändern. Nachteilig ist dies insbesondere, wenn die Heizvorrichtung auch als Leiteinrichtung für die angesaugte Ladeluft verwendet wird und die Geometrie ein wesentliches Merkmal für die Erfüllung dieser Aufgabe darstellt.

Vorteilhaft können - auch aus vorstehend genannten Gründen - ebenfalls Ausführungsformen der Brennkraftmaschine sein, bei denen die Rückführleitung stromabwärts der Heizvorrichtung in das Ansaugsystem mündet.

Vorteilhaft sind Ausführungsformen der Brennkraftmaschine, bei denen die Rückführleitung in die Gesamtansaugleitung mündet. Grundsätzlich kann die Rückführleitung auch in den Einlaßkrümmer einmünden, in eine Ansaugleitung eines einzelnen Zylinders oder die gemeinsame Ansaugleitung von mehreren Zylindern. Die Gesamtansaugleitung zeichnet sich dadurch aus, dass diese Leitung die gesamte Ladeluft führt. Wird das rückgeführte Abgas in die Gesamtansaugleitung eingeleitet, wird sichergestellt, dass die Ladeluft vor Eintritt in die Zylinder weitestgehend homogenisiert wird und das rückgeführte Abgas gleichmäßig auf die Zylinder verteilt wird.

In diesem Zusammenhang sei angemerkt, dass die Rückführleitung auch teilweise oder vollständig im Zylinderkopf integriert sein kann.

Vorteilhaft sind Ausführungsformen der Brennkraftmaschine, bei denen jeder Zylinder mindestens eine Auslaßöffnung zum Abführen der Abgase aus dem Zylinder via Abgasabführsystem aufweist, wobei die Rückführleitung aus dem Abgasabführsystem abzweigt. Die vorliegende Ausführungsform grenzt sich insofern von Konstruktionen ab, bei denen die Rückführleitung direkt von einem der Zylinder abzweigt.

Bei Brennkraftmaschinen, bei denen zwecks Aufladung mindestens eine Turbine eines Abgasturboladers im Abgasabführsystem vorgesehen ist, sind Ausführungsformen vorteilhaft, die dadurch gekennzeichnet sind, dass die Rückführleitung stromaufwärts der mindestens einen Turbine aus dem Abgasabführsystem abzweigt. Dabei mündet die Rückführleitung vorzugsweise stromabwärts eines im Ansaugsystem angeordneten Verdichters in das Ansaugsystem.

Die Aufladung dient in erster Linie der Leistungssteigerung der Brennkraftmaschine. Die Aufladung ist aber auch ein geeignetes Mittel, bei gleicher Leistung den Hubraum zu reduzieren, wodurch sich - bei gleichen Fahrzeugrandbedingungen - das Lastkollektiv zu höheren Lasten hin verschieben läßt, bei denen der spezifische Kraftstoffverbrauch niedriger ist.

Beim Betrieb einer Brennkraftmaschine mit Abgasturboaufladung und gleichzeitiger Verwendung einer Abgasrückführung kann das Abgas stromaufwärts oder stromabwärts der mindestens einen Turbine entnommen werden. Beide Varianten haben Vorteile und Nachteile.

Wird das rückgeführte Abgas gemäß der in Rede stehenden Ausführungsform mittels Hochdruck-AGR stromaufwärts der Turbine aus dem Abgasabführsystem entnommen, steht es nicht mehr zum Antrieb der Turbine zur Verfügung. Bei einer Steigerung der Abgasrückführrate nimmt der in die Turbine eingeleitete Abgasstrom weiter ab. Der verminderte Abgasmassenstrom durch die Turbine bedingt ein kleineres Turbinendruckverhältnis, wodurch das Ladedruckverhältnis ebenfalls abnimmt, was gleichbedeutend ist mit einem kleineren Verdichtermassenstrom bzw. einem abnehmenden Ladedruck. Andernfalls wird der Abgasstrom nicht durch den Verdichter geleitet, was Vorteile, insbesondere im Hinblick auf eine Verschmutzung des Verdichters, hat.

Um - insbesondere im Teillastbereich - hohe Ladedrücke und gleichzeitig hohe Abgasrückführraten zu realisieren, eignet sich eine sogenannte Niederdruck-AGR.

Im Gegensatz zu der zuvor beschriebenen Hochdruck-AGR, die stromaufwärts der Turbine Abgas aus dem Abgasabführsystem entnimmt und stromabwärts des Verdichters in das Ansaugsystem einbringt, wird bei einer Niederdruck-AGR Abgas auf die Einlaßseite zurückgeführt, welches die Turbine bereits durchströmt hat. Hierzu umfaßt die Niederdruck-AGR eine Rückführleitung, die stromabwärts der Turbine aus dem Abgasabführsystem abzweigt und stromaufwärts des Verdichters in das Ansaugsystem mündet.

Das mittels Niederdruck-AGR auf die Einlaßseite zurückgeführte Abgas wird stromaufwärts des Verdichters mit Frischluft gemischt und bildet zusammen mit dieser Frischluft die Ladeluft. Die auf diese Weise erzeugte Ladeluft wird dem Verdichter zugeführt und verdichtet, wobei die komprimierte Ladeluft stromabwärts des Verdichters einem Ladeluftkühler zugeführt werden kann.

Es ist unschädlich, dass im Rahmen der Niederdruck-AGR Abgas durch den Verdichter hindurchgeführt wird, da in der Regel Abgas verwendet wird, welches stromabwärts der Turbine einer Abgasnachbehandlung, insbesondere im Partikelfilter, unterzogen wurde. Ablagerungen im Verdichter, welche die Geometrie des Verdichters, insbesondere die Strömungsquerschnitte, verändern und auf diese Weise den Wirkungsgrad des Verdichters verschlechtern, sind daher nicht zu befürchten.

Bei Brennkraftmaschinen, bei denen zwecks Aufladung mindestens eine Turbine eines Abgasturboladers im Abgasabführsystem vorgesehen ist, sind aus den vorstehend genannten Gründen daher auch Ausführungsformen vorteilhaft, die dadurch gekennzeichnet sind, dass die Rückführleitung stromabwärts der mindestens einen Turbine aus dem Abgasabführsystem abzweigt. Dabei mündet die Rückführleitung vorzugsweise stromaufwärts eines im Ansaugsystem angeordneten Verdichters in das Ansaugsystem, um das für die Förderung des Abgases erforderliche Druckgefälle zu generieren bzw. zu erhalten.

Vorteilhaft können auch Ausführungsformen der Brennkraftmaschine sein, bei denen sowohl eine Niederdruck-AGR als auch eine Hochdruck-AGR vorgesehen ist.

Vorteilhaft sind Ausführungsformen der Brennkraftmaschine, bei denen die Heizvorrichtung mindestens ein bandförmiges Heizelement aufweist, welches mit einer ersten schmalen Seite des Querschnitts der angesaugten Ladeluftströmung zugewandt ist.

Eine bandförmige Ausbildung des Heizelements zusammen mit der konkreten Ausrichtung des Heizelementes bietet strömungstechnisch und im Hinblick auf den Wärmeübergang Vorteile.

Vorteilhaft sind Ausführungsformen der Brennkraftmaschine, bei denen die Heizvorrichtung benachbart zu dem Verteilerknotenpunkt angeordnet ist, in dem die Ansaugleitungen zu der Gesamtansaugleitung zusammenführen.

Gemäß der vorliegenden Ausführungsformen wird die Heizvorrichtung möglichst nahe an den Einlaßöffnungen der Zylinder angeordnet, nämlich benachbart zu dem Verteilerknotenpunkt eines Einlaßkrümmers, an dem die einzelnen Ansaugleitungen zu den mindestens zwei Zylindern abzweigen. Diese Anordnung unterstützt die Heizvorrichtung in ihrer eigentlichen Funktion, nämlich den Zylindern vorerwärmte Verbrennungsluft zur Verfügung zu stellen, d. h. zu zuführen.

Durch die Anordnung der Heizvorrichtung nahe am Verteilerknotenpunkt wird der Weg der vorerwärmten Ladeluft zu den Zylindern weitestgehend verkürzt. Damit wird der vorerwärmten Ladeluft möglichst wenig Wegstrecke und Zeit zur Abkühlung eingeräumt. Die thermische Trägheit des Teilstücks der Ansaugleitungen zwischen der Einlaßöffnung am Zylinder und der Heizvorrichtung wird minimiert und zwar durch Reduzierung der Masse und der Länge dieses Teilstückes. Diese Maßnahme stellt sicher, dass die Ladeluft bei Eintritt in die Zylinder eine möglichst hohe Temperatur aufweist.

Vorteilhaft sind Ausführungsformen der Brennkraftmaschine, bei denen die Ansaugleitungen von mindestens zwei Zylindern unter Ausbildung eines Einlaßkrümmers innerhalb des mindestens einen Zylinderkopfes zu einer Gesamtansaugleitung zusammenführen. Die Integration des Einlaßkrümmers in den Zylinderkopf verkürzt die vorliegend relevante Wegstrecke der Ansaugleitungen weiter und damit die thermische Trägheit des Teilstücks der Ansaugleitungen zwischen dem Zylindereinlaß und der Heizvorrichtung. Diese Maßnahme gestattet darüber hinaus ein dichtes Packaging der Antriebseinheit und verringert die Anzahl an Bauteilen und damit die Montage- und Bereitstellungskosten.

Nichtsdestotrotz können Ausführungsformen der Brennkraftmaschine vorteilhaft sein, bei denen die Ansaugleitungen von mindestens zwei Zylindern außerhalb des mindestens einen Zylinderkopfes zu einer Gesamtansaugleitung zusammenführen und - zumindest teilweise - einen externen Einlaßkrümmer ausbilden.

Die nahe Anordnung der Heizvorrichtung an den Zylindern ermöglicht es, die bandförmigen Heizelemente derart auszurichten bzw. auszubilden, dass diese eine gleichmäßige Verteilung der angesaugten Ladeluft auf die einzelnen Zylinder unterstützen. Die Heizvorrichtung dient dabei auch als Leitvorrichtung.

Vorteilhaft sind dabei Ausführungsformen der Brennkraftmaschine, bei denen der Abstand Δ zwischen der Heizvorrichtung und dem Verteilerknotenpunkt kleiner ist als der Durchmesser *d* eines Zylinders mit Δ< *d.*

Als Abstand Δ zwischen der Heizvorrichtung und dem Verteilerknotenpunkt wird im Rahmen der vorliegenden Erfindung die Wegstrecke zwischen dem Austritt aus der Heizvorrichtung und der Mitte des Verteilerknotenpunktes, in dem sich die mittleren Stromfäden der Ansaugleitungen treffen, bezeichnet.

Vorteilhaft sind dabei auch Ausführungsformen der Brennkraftmaschine, bei denen der Abstand Δ zwischen der Heizvorrichtung und dem Verteilerknotenpunkt kleiner ist als der halbe Durchmesser d eines Zylinders mit Δ < 0.5*d* bzw. kleiner ist als ein Viertel des Durchmesser *d* eines Zylinders mit Δ < 0.25*d*.

Die zusätzliche Verkürzung des Abstandes Δ zwischen der Heizvorrichtung und dem Verteilerknotenpunkt gemäß den beiden vorstehend genannten Ausführungsformen trägt dazu bei, die Wegstrecke zu den Zylindern für die vorerwärmte Ladeluft weiter zu verkürzen, d. h. die thermische Trägheit des Teilstücks der Ansaugleitungen zwischen dem Zylindereinlaß und der Heizvorrichtung zu vermindern.

Bei Brennkraftmaschinen, bei denen die mindestens zwei Zylinder entlang der Längsachse des mindestens einen Zylinderkopfes in Reihe angeordnet sind, sind Ausführungsformen vorteilhaft, die dadurch gekennzeichnet sind, dass das mindestens eine bandförmige Heizelement im Wesentlichen horizontal entlang einer Parallelen zur Längsachse, vorzugsweise parallel zur Längsachse, des mindestens einen Zylinderkopfes ausgerichtet ist.

Untersuchungen haben gezeigt, dass eine horizontale Ausrichtung der Heizelemente hinsichtlich der Verteilung der angesaugten Ladeluft auf die einzelnen Zylinder vorteilhaft ist und auch Vorteile hinsichtlich des Füllungsgrades bietet.

Bei Brennkraftmaschinen der in Rede stehenden Art, bei denen die mindestens zwei Zylinder entlang der Längsachse des mindestens einen Zylinderkopfes in Reihe angeordnet sind, sind insbesondere Ausführungsformen vorteilhaft, die dadurch gekennzeichnet sind, dass das mindestens eine bandförmige Heizelement im Wesentlichen vertikal quer, vorzugsweise senkrecht, zu einer Parallelen der Längsachse des mindestens einen Zylinderkopfes ausgerichtet ist.

Eine derartige Ausrichtung der bandförmigen Heizelemente ist besonders geeignet, um die Heizelemente als Leiteinrichtung für die erwärmte Luftströmung auszubilden bzw. zu nutzen. Mit einer solchen Leiteinrichtung kann die angesaugte Ladeluft in vorteilhafter Weise geführt und gelenkt werden, in der Art, dass eine gleichmäßige Verteilung der Luft auf die einzelnen Zylinder erfolgt. Eine gleichmäßige Füllung der Zylinder mit Frischgemisch wird angestrebt. Dadurch verbessert sich das Betriebsverhalten der Brennkraftmaschine, insbesondere im Hinblick auf die Schadstoffemissionen, den Kraftstoffverbrauch und die verfügbare Leistung.

Vorteilhaft sind Ausführungsformen der Brennkraftmaschine, bei denen ein Ladeluftkühler vorgesehen ist, der mit einer Bypaßleitung ausgestattet ist, die stromaufwärts der Heizvorrichtung in das Ansaugsystem einmündet.

Der Ladeluftkühler senkt die Lufttemperatur und steigert damit die Dichte der Luft, wodurch auch der Kühler zu einer besseren Füllung der Zylinder mit Luft, d. h. zu einer größeren Luftmasse beiträgt. Die Ausstattung des Ladeluftkühlers mit einer Bypaßleitung zwecks Umgehung des Kühlers erweist sich insbesondere nach einem Kaltstart der Brennkraftmaschine bzw. während der Warmlaufphase als vorteilhaft. Eine Kühlung der angesaugten Luft in diesen Betriebszuständen würde dem Erwärmen in der Heizvorrichtung entgegen stehen, d. h. zuwiderlaufen.

Vorteilhaft sind Ausführungsformen der Brennkraftmaschine, bei denen sich das mindestens eine bandförmige Heizelement zu einer ersten schmalen Stirnseite hin, die der angesaugten Verbrennungsluftströmung zugewandt ist, verjüngt. Es ergeben sich strömungstechnische Vorteile. Dabei schneiden die Heizelemente messerartig in die sie anströmende Luft ein. Ebenfalls vorteilhaft sind Ausführungsformen, bei denen sich eine erste schmale Stirnseite des mindestens einen bandförmigen Heizelementes, die der angesaugten Verbrennungsluftströmung zugewandt ist, verjüngt.

Vorteilhaft sind Ausführungsformen der Brennkraftmaschine, bei denen der Querschnitt des mindestens einen bandförmigen Heizelementes bogenförmig ausgebildet ist, so dass das mindestens eine bandförmige Heizelement eine schaufelförmige Gestalt aufweist. Eine bogenförmige Ausbildung des bandförmigen Heizelementes ist vorteilhaft hinsichtlich einer Verwendung der Heizvorrichtung als Leiteinrichtung.

Vorteilhaft sind Ausführungsformen der Brennkraftmaschine, bei denen die Heizvorrichtung mindestens zwei bandförmige Heizelemente aufweist. Mit der Anzahl der Heizelemente nimmt auch die wärmeübertragende Fläche zu und damit die Wärmemenge, die auf die angesaugte Verbrennungsluft übertragbar ist. Der Anzahl an Heizelementen kommt hinsichtlich des Wärmeübergangs eine nicht zu vernachlässigende Bedeutung zu, da die Strömungsgeschwindigkeiten in der Gesamtansaugleitung hoch sind und die Temperatur der Heizelemente und damit die Temperaturdifferenz zwischen den Heizelementen und der Luft nicht beliebig erhöht werden kann, um den Wärmeübergang zu steigern.

Die Ausbildung der Heizvorrichtung als Leiteinrichtung wird ebenfalls erleichtert, wenn mehrere Heizelemente vorgesehen werden und zur Beeinflussung der Strömung verwendet werden können.

Vorteilhaft sind dabei Ausführungsformen der Brennkraftmaschine, bei denen die mindestens zwei bandförmigen Heizelemente beabstandet zueinander angeordnet sind. Erst auf diese Weise laßen sich die Vorteile, die mehrere Heizelemente bieten, nutzen.

Die zweite der Erfindung zugrunde liegende Teilaufgabe, nämlich ein Verfahren zum Betreiben einer Brennkraftmaschine einer zuvor beschriebenen Art aufzuzeigen, wird gelöst durch ein Verfahren, das dadurch gekennzeichnet ist, dass
- die Heizvorrichtung zur Erwärmung der Ladeluft aktiviert wird, wenn die Kraftstoffzufuhr der Brennkraftmaschine deaktiviert wird.

Das bereits für die erfindungsgemäße Brennkraftmaschine Gesagte gilt auch für das erfindungsgemäße Verfahren, weshalb auf die entsprechenden Ausführungen Bezug genommen wird.

Wird die Kraftstoffzufuhr deaktiviert, fehlt die bei der Verbrennung durch die exotherme, chemische Umwandlung des Kraftstoffes freigesetzte Wärme, um die Brennkraftmaschine auf Betriebstemperatur zu halten.

Daher ist es vorteilhaft, die Heizvorrichtung zur Erwärmung der Ladeluft zu aktivieren, wenn die Kraftstoffzufuhr der Brennkraftmaschine deaktiviert wird.

Vorteilhaft sind dabei Ausführungsformen des Verfahrens, bei denen die Heizvorrichtung zur Erwärmung der Ladeluft aktiviert wird, wenn die Brennkraftmaschine in den Schubbetrieb überführt oder eine Motorbremse aktiviert wird.

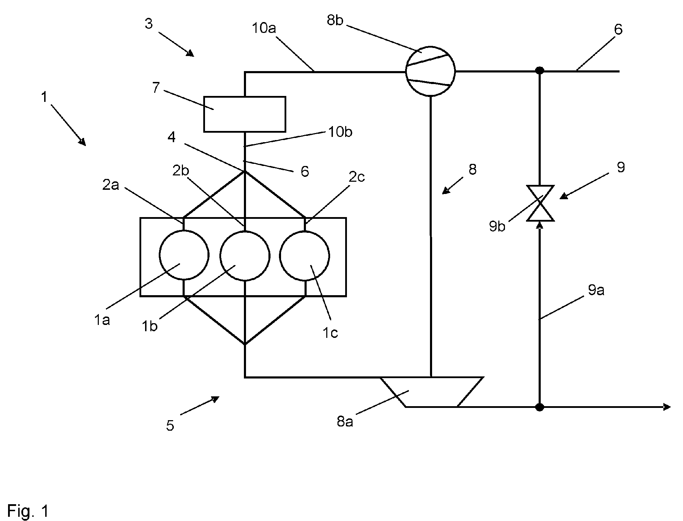

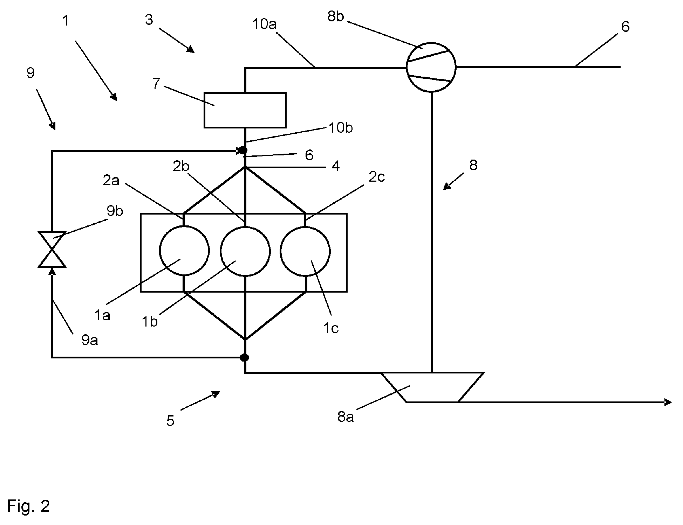

Im Folgenden wird die Erfindung anhand von zwei Ausführungsbeispielen gemäß den
Figuren 1 und 2 näher beschrieben. Hierbei zeigt:
   - Fig. 1: schematisch eine erste Ausführungsform der Brennkraftmaschine, und
   - Fig.2: schematisch eine zweite Ausführungsform der Brennkraftmaschine.

Figur 1 zeigt schematisch eine erste Ausführungsform der Brennkraftmaschine 1.

Die Brennkraftmaschine 1 umfaßt drei Zylinder 1a, 1b, 1c, die entlang der Längsachse des Zylinderkopfes in Reihe angeordnet sind. Die Zylinder 1a, 1b, 1c der Brennkraftmaschine 1 werden via Ansaugsystem 3 mit Frischluft bzw. Ladeluft 10a, 10b versorgt.

Jeder Zylinder 1a, 1b, 1c weist eine Einlaßöffnung zum Zuführen der Ladeluft 10a, 10b auf, wobei zu jeder Einlaßöffnung eine Ansaugleitung 2a, 2b, 2c führt und die Ansaugleitungen 2a, 2b, 2c der drei Zylinder 1a, 1b, 1c unter Ausbildung eines Verteilerknotenpunktes 4 zu einer Gesamtansaugleitung 6 zusammenführen.

In der Gesamtansaugleitung 6 ist eine Heizvorrichtung 7 angeordnet. Die via Gesamtansaugleitung 6 angesaugte Ladeluft 10a wird beim Durchströmen der aktivierten Heizvorrichtung 7 erwärmt. Die erwärmte Ladeluft 10b wird anschließend, d. h. stromabwärts der Heizvorrichtung 7, am Verteilerknotenpunkt 4 auf die einzelnen Zylinder 1a, 1b, 1c verteilt. Die Heizvorrichtung 7 ist benachbart, d. h. in unmittelbarer Nähe zu dem Verteilerknotenpunkt 4 angeordnet, wobei der Abstand Δ zwischen der Heizvorrichtung 7 und dem Verteilerknotenpunkt 4 kleiner ist als der Durchmesser deines Zylinders 1a, 1b, 1c

Zum Abführen der Abgase aus den Zylindern 1a, 1b, 1c via Abgasabführsystem 5 weist jeder Zylinder 1a, 1b, 1c eine Auslaßöffnung auf, an die sich eine Abgasleitung anschließt. Die Abgasleitungen der Zylinder 1a, 1b, 1c führen unter Ausbildung eines Abgaskrümmers zu einer Gesamtabgasleitung zusammen.

Die in Figur 1 dargestellte Brennkraftmaschine 1 ist zwecks Aufladung mit einem Abgasturbolader 8 ausgestattet, dessen Turbine 8a im Abgasabführsystem 5 und dessen Verdichter 8b in der Gesamtansaugleitung 6 des Ansaugsystems 3 angeordnet ist.

Darüber hinaus ist die Brennkraftmaschine 1 mit einer externen Abgasrückführung 9 ausgestattet, deren Rückführleitung 9a stromabwärts der Turbine 8a aus dem Abgasabführsystem 5 abzweigt und stromaufwärts des Verdichters 8b in das Ansaugsystem 3 mündet. Folglich handelt es sich bei der in Figur 1 vorgesehenen Abgasrückführung 9 um eine Niederdruck-AGR. Das rückgeführte - gegebenenfalls nachbehandelte - Abgas durchströmt sowohl den Verdichter 8b als auch die Heizvorrichtung 7. Zur Einstellung der Rückführrate ist in der Rückführleitung 9a ein als AGR-Ventil 9b dienendes Absperrelement 9b vorgesehen.

Figur 2 zeigt schematisch eine zweite Ausführungsform der Brennkraftmaschine 1. Es sollen nur die Unterschiede zu der in Figur 1 dargestellten Ausführungsform erörtert werden, weshalb im Übrigen Bezug genommen wird auf Figur 1. Für dieselben Bauteile wurden dieselben Bezugszeichen verwendet.

Im Unterschied zu der in Figur 1 dargestellten Ausführungsform zweigt die Rückführleitung 9a der Abgasrückführung 9 stromaufwärts der Turbine 8a aus dem Abgasabführsystem 5 ab und mündet stromabwärts des Verdichters 8b in das Ansaugsystem 3 ein. Folglich handelt es sich bei der in Figur 2 vorgesehenen Abgasrückführung 9 um eine Hochdruck-AGR. Zur Einstellung der Rückführrate ist in der Rückführleitung 9a wieder ein als AGR-Ventil 9b dienendes Absperrelement 9b vorgesehen.

Vorliegend mündet die Rückführleitung 9a stromabwärts der Heizvorrichtung 7 in die Gesamtansaugleitung 6 des Ansaugsystems 3 ein, so dass das rückgeführte Abgas nicht die Heizvorrichtung 7 durchströmt.

### Bezugszeichen

- 1: Brennkraftmaschine
- 1a: Zylinder
- 1b: Zylinder
- 1c: Zylinder
- 2a: Ansaugleitung
- 2b: Ansaugleitung
- 2c: Ansaugleitung
- 3: Ansaugsystem
- 4: Verteilerknotenpunkt
- 5: Abgasabführsystem
- 6: Gesamtansaugleitung
- 7: Heizvorrichtung
- 8: Abgasturbolader
- 8a: Turbine
- 8b: Verdichter
- 9: Abgasrückführung (AGR)
- 9a: Rückführleitung
- 9b: AGR-Ventil, Absperrelement
- 10a: angesaugte Ladeluft
- 10b: erwärmte Ladeluft

- Δ: Abstand zwischen der Heizvorrichtung und dem Verteilerknotenpunkt
- ***d***: Durchmesser eines Zylinders
- ***m**_{AGR}*: Masse an zurückgeführtem Abgas
- ***m**_{Frischluft}*: Frischluftmasse
- ***x**_{AGR}*: Abgasrückführrate

## Patentansprüche

1. Brennkraftmaschine (1) mit mindestens einem Zylinderkopf und mindestens zwei Zylindern (1a, 1b, 2c), bei der jeder Zylinder (1a, 1b, 1c) mindestens eine Einlaßöffnung zum Zuführen von Ladeluft (10a, 10b) in den Zylinder (1a, 1b, 1c) via Ansaugsystem (3) aufweist, wobei
- zu jeder Einlaßöffnung eine Ansaugleitung (2a, 2b, 2c) führt,
- die Ansaugleitungen (2a, 2b, 2c) von mindestens zwei Zylindern (1a, 1b, 1c) unter Ausbildung eines Verteilerknotenpunktes (4) zu einer Gesamtansaugleitung (6) zusammenführen,
- in der Gesamtansaugleitung (6) eine Heizvorrichtung (7) angeordnet ist, **dadurch gekennzeichnet, dass**
- mindestens eine externe Abgasrückführung (9) vorgesehen ist, die mit einer Rückführleitung (9a) ausgestattet ist, welche stromaufwärts der Heizvorrichtung (7) in das Ansaugsystem (3) mündet, und dass,
- die Heizvorrichtung (7) benachbart zu dem Verteilerknotenpunkt (4) angeordnet ist, in dem die Ansaugleitungen (2a, 2b, 2c) zu der Gesamtansaugleitung (6) zusammenführen, wobei der Abstand Δ zwischen der Heizvorrichtung (7) und dem Verteilerknotenpunkt (4) kleiner ist als der halbe Durchmesser d eines Zylinders (1a, 1b, 1c) mit Δ < 0.5*d.*

2. Brennkraftmaschine (1) nach Anspruch 1, **dadurch gekennzeichnet, dass** die Rückführleitung (9a) in die Gesamtansaugleitung (6) mündet.

3. Brennkraftmaschine (1) nach Anspruch 1 oder 2, **dadurch gekennzeichnet, dass** jeder Zylinder (1a, 1b, 1c) mindestens eine Auslaßöffnung zum Abführen der Abgase aus dem Zylinder (1a, 1b, 1c) via Abgasabführsystem (5) aufweist, wobei die Rückführleitung (9a) aus dem Abgasabführsystem (5) abzweigt.

4. Brennkraftmaschine (1) nach Anspruch 3, bei der zwecks Aufladung mindestens eine Turbine (8a) eines Abgasturboladers (8) im Abgasabführsystem (5) vorgesehen ist, **dadurch gekennzeichnet, dass** die Rückführleitung (9a) stromaufwärts der mindestens einen Turbine (8a) aus dem Abgasabführsystem (5) abzweigt.

5. Brennkraftmaschine (1) nach Anspruch 3, bei der zwecks Aufladung mindestens eine Turbine (8a) eines Abgasturboladers (8) im Abgasabführsystem (5) vorgesehen ist, **dadurch gekennzeichnet, dass** die Rückführleitung (9a) stromabwärts der mindestens einen Turbine (8a) aus dem Abgasabführsystem (5) abzweigt.

6. Brennkraftmaschine (1) nach einem der vorherigen Ansprüche, **dadurch gekennzeichnet, dass** die Heizvorrichtung (7) mindestens ein bandförmiges Heizelement aufweist, welches mit einer ersten schmalen Seite des Querschnitts der angesaugten Ladeluftströmung (10a) zugewandt ist.

7. Brennkraftmaschine (1) nach einem der vorherigen Ansprüche, **dadurch gekennzeichnet, dass** der Abstand Δ zwischen der Heizvorrichtung (7) und dem Verteilerknotenpunkt (4) kleiner ist als ein Viertel des Durchmesser d eines Zylinders (1a, 1b, 1c) mit Δ < 0.25*d*.

8. Brennkraftmaschine (1) nach Anspruch 6 oder 7, bei der die mindestens zwei Zylinder (1a, 1b, 1c) entlang der Längsachse des mindestens einen Zylinderkopfes in Reihe angeordnet sind, **dadurch gekennzeichnet, dass** das mindestens eine bandförmige Heizelement im Wesentlichen horizontal entlang einer Parallelen zur Längsachse des mindestens einen Zylinderkopfes ausgerichtet ist.

9. Brennkraftmaschine (1) nach Anspruch 6 oder 7, bei der die mindestens zwei Zylinder (1a, 1b, 1c) entlang der Längsachse des mindestens einen Zylinderkopfes in Reihe angeordnet sind, **dadurch gekennzeichnet, dass** das mindestens eine bandförmige Heizelement im Wesentlichen vertikal quer zu einer Parallelen der Längsachse des mindestens einen Zylinderkopfes ausgerichtet ist.

10. Brennkraftmaschine (1) nach einem der vorherigen Ansprüche, **dadurch gekennzeichnet, dass** ein Ladeluftkühler vorgesehen ist, der mit einer Bypaßleitung ausgestattet ist, die stromaufwärts der Heizvorrichtung (7) in das Ansaugsystem (3) einmündet.

11. Verfahren zum Betreiben einer Brennkraftmaschine (1) nach einem der vorherigen Ansprüche, **dadurch gekennzeichnet, dass** die Heizvorrichtung (7) zur Erwärmung der Ladeluft (10a, 10b) aktiviert wird, wenn die Kraftstoffzufuhr der Brennkraftmaschine (1) deaktiviert wird.

## Claims

1. Internal combustion engine (1) having at least one cylinder head and at least two cylinders (1a, 1b, 1c), in which each cylinder (1a, 1b, 1c) has at least one inlet opening for the supply of charge air (10a, 10b) into the cylinder (1a, 1b, 1c) via an intake system (3),
- an intake line (2a, 2b, 2c) leading to each inlet opening,
- the intake lines (2a, 2b, 2c) of at least two cylinders (1a, 1b, 1c) merging to form an overall intake line (6), such that a distributor junction point (4) is formed, and
- a heating device (7) being arranged in the overall intake line (6), **characterized in that**
- at least one external exhaust-gas recirculation arrangement (9) is provided which is equipped with a recirculation line (9a) which opens into the intake system (3) upstream of the heating device (7),
and **in that**
- the heating device (7) is arranged adjacent to the distributor junction point (4) at which the intake lines (2a, 2b, 2c) merge to form the overall intake line (6), the spacing Δ between the heating device (7) and the distributor junction point (4) being smaller than half of the diameter d of a cylinder (1a, 1b, 1c), with Δ < 0.5 d.

2. Internal combustion engine (1) according to Claim 1, **characterized in that** the recirculation line (9a) opens into the overall intake line (6).

3. Internal combustion engine (1) according to Claim 1 or 2, **characterized in that** each cylinder (1a, 1b, 1c) has at least one outlet opening for the discharge of the exhaust gases from the cylinder (1a, 1b, 1c) via an exhaust-gas discharge system (5), the recirculation line (9a) branching off from the exhaust-gas discharge system (5).

4. Internal combustion engine (1) according to Claim 3, in which, for supercharging purposes, at least one turbine (8a) of an exhaust-gas turbocharger (8) is provided in the exhaust-gas discharge system (5), **characterized in that** the recirculation line (9a) branches off from the exhaust-gas discharge system (5) upstream of the at least one turbine (8a).

5. Internal combustion engine (1) according to Claim 3, in which, for supercharging purposes, at least one turbine (8a) of an exhaust-gas turbocharger (8) is provided in the exhaust-gas discharge system (5), **characterized in that** the recirculation line (9a) branches off from the exhaust-gas discharge system (5) downstream of the at least one turbine (8a).

6. Internal combustion engine (1) according to one of the preceding claims, **characterized in that** the heating device (7) has at least one strip-like heating element which faces by way of a first narrow side of the cross section toward the inducted charge-air flow (10a).

7. Internal combustion engine according to one of the preceding claims, **characterized in that** the spacing Δ between the heating device (7) and the distributor junction point (4) is smaller than one quarter of the diameter *d* of a cylinder (1a, 1b, 1c), with Δ < 0.25*d*.

8. Internal combustion engine according to Claim 6 or 7, in which the at least two cylinders (1a, 1b, 1c) are in an in-line arrangement along the longitudinal axis of the at least one cylinder head, **characterized in that** the at least one strip-like heating element is aligned substantially horizontally along a line parallel to the longitudinal axis of the at least one cylinder head.

9. Internal combustion engine according to Claim 6 or 7, in which the at least two cylinders (1a, 1b, 1c) are in an in-line arrangement along the longitudinal axis of the at least one cylinder head, **characterized in that** the at least one strip-like heating element is aligned substantially vertically, perpendicular to a line parallel to the longitudinal axis of the at least one cylinder head.

10. Internal combustion engine (1) according to one of the preceding claims, **characterized in that** a charge-air cooler is provided which is equipped with a bypass line which opens into the intake system (3) upstream of the heating device (7).

11. Method for operating an internal combustion engine (1) according to one of the preceding claims, **characterized in that** the heating device (7) is activated for the purposes of heating the charge air (10a, 10b) when the fuel supply to the internal combustion engine (1) is deactivated.

## Revendications

1. Moteur (1) à combustion interne présentant
au moins une tête de cylindre et au moins deux cylindres (1a, 1b, 1c) et dans lequel chaque cylindre (1a, 1b, 1c) présente au moins une ouverture d'admission qui permet d'amener de l'air de suralimentation (10a, 10b) dans le cylindre (1a, 1b, 1c) par l'intermédiaire d'un système d'aspiration (3),
un conduit d'aspiration (2a, 2b, 2c) conduisant à chaque ouverture d'admission,
les conduits d'aspiration (2a, 2b, 2c) d'au moins deux cylindres (1a, 1b, 1c) étant réunis en un conduit global d'aspiration (6) en formant un point de noeud (4) de répartition,
un dispositif de chauffage (7) étant disposé dans le conduit (6) d'aspiration global,
**caractérisé en ce que**
au moins un renvoi externe (9) des gaz d'échappement est prévu et est équipé d'un conduit (9a) de renvoi qui débouche dans le système d'aspiration (3) en amont du dispositif de chauffage (7) et
**en ce que** le dispositif de chauffage (7) est disposé au voisinage du point de noeud (4) de répartition auquel les conduits d'aspiration (2a, 2b, 2c) sont réunis en un conduit global (6) d'aspiration, la distance Δ entre le dispositif de chauffage (7) et le point de noeud (4) de répartition étant inférieure au demi-diamètre *d* d'un cylindre (1a, 1b, 1c), avec Δ < 0,5 *d*.

2. Moteur (1) à combustion interne selon la revendication 1, **caractérisé en ce que** le conduit de renvoi (9a) débouche dans le conduit global d'aspiration (6).

3. Moteur (1) à combustion interne selon les revendications 1 ou 2, **caractérisé en ce que** chaque cylindre (1a, 1b, 1c) présente au moins une ouverture de sortie qui permet d'évacuer les gaz d'échappement hors du cylindre (1a, 1b, 1c) par l'intermédiaire d'un système (5) d'évacuation des gaz d'échappement, le conduit de renvoi (9a) étant une ramification du système (5) d'évacuation des gaz d'échappement.

4. Moteur (1) à combustion interne selon la revendication 3, dans lequel au moins une turbine (8a) d'un turbocompresseur (8) sur gaz d'échappement est prévue pour la suralimentation dans le système (5) d'évacuation des gaz d'échappement, **caractérisé en ce que** le conduit de renvoi (9a) est dérivé du système (5) d'évacuation des gaz d'échappement en amont de la ou des turbines (8a).

5. Moteur (1) à combustion interne selon la revendication 3, dans lequel au moins une turbine (8a) d'un turbocompresseur (8) sur gaz d'échappement est prévue pour la suralimentation dans le système (5) d'évacuation des gaz d'échappement, **caractérisé en ce que** le conduit de renvoi (9a) est dérivé du système (5) d'évacuation des gaz d'échappement en aval de la ou des turbines (8a).

6. Moteur (1) à combustion interne selon l'une des revendications précédentes, **caractérisé en ce que** le dispositif de chauffage (7) présente au moins un élément chauffant en forme de ruban dont un premier côté étroit de la section transversale est tourné vers l'écoulement aspiré (10a) d'air de suralimentation.

7. Moteur (1) à combustion interne selon l'une des revendications précédentes, **caractérisé en ce que** la distance Δ entre le dispositif de chauffage (7) et le point de noeud (4) de répartition est inférieure au quart du diamètre d d'un cylindre (1a, 1b, 1c), avec Δ < 0,25 *d*.

8. Moteur (1) à combustion interne selon les revendications 6 ou 7, dans lequel au moins deux cylindres (1a, 1b, 1c) sont disposés en série suivant l'axe longitudinal de la ou des têtes de cylindre, **caractérisé en ce qu'**au moins un élément chauffant en forme de ruban est orienté essentiellement à l'horizontale le long d'une parallèle à l'axe longitudinal de la ou des têtes de cylindre.

9. Moteur (1) à combustion interne selon les revendications 6 ou 7, dans lequel au moins deux cylindres (1a, 1b, 1c) sont disposés en série suivant l'axe longitudinal de la ou des têtes de cylindre, **caractérisé en ce qu'**au moins un élément chauffant en forme de ruban est orienté essentiellement à la verticale, transversalement à une parallèle à l'axe longitudinal de la ou des têtes de cylindre.

10. Moteur (1) à combustion interne selon l'une des revendications précédentes, **caractérisé en ce qu'**un refroidisseur d'air de suralimentation est prévu et est équipé d'un conduit de dérivation qui débouche dans le système d'aspiration (3) en amont du dispositif de chauffage (7).

11. Procédé de conduite d'un moteur (1) à combustion interne selon l'une des revendications précédentes, **caractérisé en ce que** le dispositif de chauffage (7) est activé pour chauffer l'air de suralimentation (10a, 10b) lorsque l'amenée de carburant au moteur (1) à combustion interne est désactivée.
